# EUROPEAN PATENT APPLICATION

(11) **EP 1 248 396 A1**
(43) Date of publication of application: **09.10.2002**
(21) Application number: 01440093.1
(22) Date of filing: 02.04.2001
(51) Int. Cl.: H04B 17/00, H04L 1/00

(54) **Method and receiver for evaluating a radio link quality in a wireless communication network**

(71) Applicant: ALCATEL, 75008 Paris (FR)
(72) Inventor: Paul, Nicolas, 75002 Paris (FR); Brouet, Jérôme, 75014 Paris (FR)
(74) Representative: Urlichs, Stefan, Dipl.-Phys.

(57) **Abstract**

The invention relates notably to a method for evaluating a radio link quality from a data signal transmitted over a radio link in a wireless radio communication network, the data signal being obtained after encoding and modulation of a data packet, the data packet comprising a predefined symbol sequence, the data signal being received and demodulated at a receiver

According to the invention, the method comprises the steps of:
- calculating an error power by comparing a version of the predefined symbol sequence in the demodulated data signal with said predefined symbol sequence known at the receiver;
- determining the radio link quality indicator from a predefined relation between the error power and the radio link quality indicator.

## Description

### Background of the Invention

The present invention relates to wireless communication network and more precisely to a method for evaluating a radio link quality indicator in a wireless communication network.

Usually, the evaluation of a radio link quality is used for determining the distortion experienced by a data signal transmitted on a radio link. In prior art, the radio link quality is evaluated, for example, in code division multiple access networks for power control purpose : the poorer the radio link quality, the more the transmitted power of the data signal should be increased.

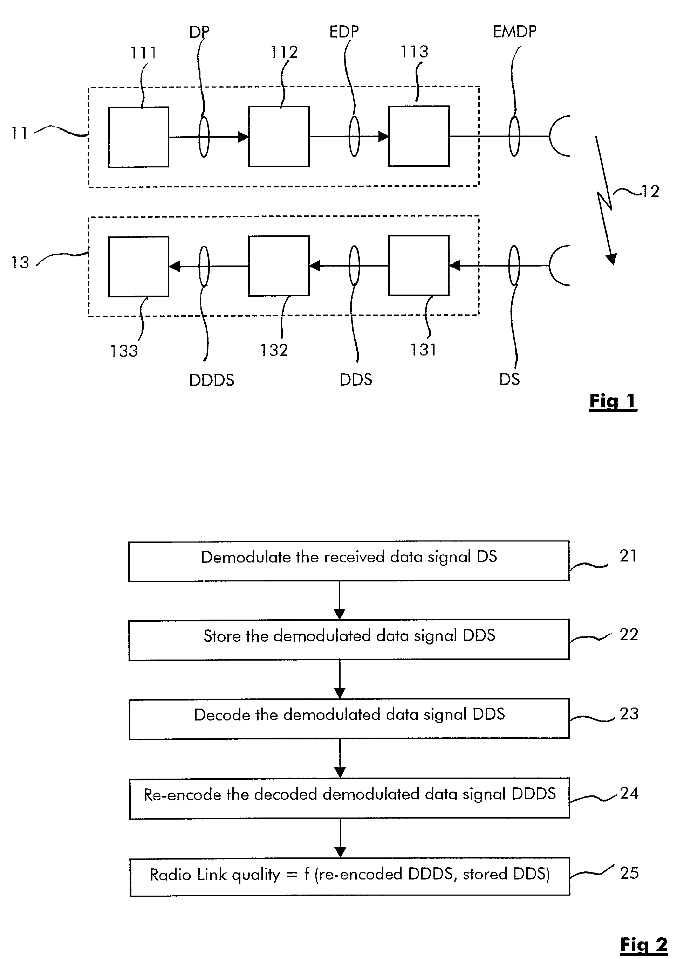

Figure 1 shows a simplified system comprising a transmitter 11, a radio link 12, and a receiver 13 that can be used to illustrate a prior art method for evaluating a radio link quality indicator.

At transmitter 11, a data source 111 generates data packets DP, which are encoded with a predefined encoding scheme at encoder 1 12 to generate encoded data packets EDP. A predefined symbol sequence is included in the encoded data packets EDP which are in turn modulated with a predefined modulation scheme at modulator 113 to generate modulated encoded data packets EMDP. The data signal transmitted on the radio link 12 corresponds a succession of EMDP.

At receiver 13, the received data signal possibly affected by radio link impairment is demodulated at demodulator 131 with the counterpart demodulation scheme to generate a demodulated data signal DDS and decoded at decoder 132 according with the counterpart decoding scheme to generate a demodulated decoded data signal DDDS. At this stage, the structure of the original data packet has been recovered and module 133 further processes the received data packet.

Figure 2 illustrates a prior art method used for determining a radio link quality indicator.
- Step 21: Demodulate the received data signal DS at demodulator 313
- Step 22: Store the demodulated data signal DDS in a memory location.
- Step 23: Decode the demodulated data signal at decoder 132
- Step 24: Re-encode the DDDS according with the same encoding scheme as at the transmission side.
- Step 25: The radio link quality is a function of the difference between re-encoded DDDS (obtained at step 24) and of the stored DDS (step 23).

Usually, the encoding scheme is selected for its error correction capability to ensure an acceptable bit error rate in the DDDS.

For the purpose of evaluation of a radio link quality indicator, it is even assumed that after decoding, the transmission errors due to the radio link impairments have been all corrected thanks to the used encoding scheme. As a consequence, it is assumed that the DDDS matches exactly the transmitted data packet DP.

Re-encoding the DDDS enables the receiver to reconstruct the demodulated data signal DDS that would have been obtained at the output of demodulator 131 if the radio link were not submit to impairments.

By comparison between the stored demodulated data signal and the re-encoded data packets, the receiver can evaluate the impairments that have affected the data signal upon transmission. Usually, the radio link quality is directly deduced from the difference between the demodulated data signal and the re-encoded data packets.

This solution is that it is not precise enough since in case of bad radio link quality. Indeed, the decoded bits DDDS are most probably erroneous because the decoder is not error-resistant enough for such bad transmission quality. As a consequence, the radio link estimation comprises a component depending exclusively on the decoder efficiency. This biases the results of the real radio link quality.

Moreover, for good radio link quality (i.e. for which the decoder does not biases the results), the estimated radio link quality reflects the number of erroneous bits in a burst. Most of the time, the burst comprises a too little number of bits to give precise results A radio link quality better than 10⁻³ cannot be observed with this method for burst comprising some hundreds of bits unless an average value is calculated over a high number of bursts.

Another drawback is that this method requires a high processing power and memory size since the output of the demodulator has to be stored and the decoded data signal has to be re-encoded.

Moreover, the radio link quality indicator evaluating according to the above presented method are very dependant of the used encoding scheme and cannot be considered as an absolute value. Indeed, very different values for the radio link quality evaluation would be obtained if using a very error-resistant encoding scheme or if using a less error-resistant encoding scheme. In the case of a less error-resistant encoding scheme, the result is distorted by the errors due to the encoding scheme itself. This is especially a problem in systems supporting more than one encoding scheme and more particularly in systems where the modulation scheme to be used vary in accordance with the radio link quality.

A particular object of the present invention is to provide a method for evaluating a radio link quality in a wireless communication network that give results being independent from the encoding scheme used on the radio link and requiring less processing power than the usual methods.

Another object of the invention is to provide a receiver used in a wireless communication network supporting a method for evaluating a radio link quality independently from the encoding scheme used on the radio link and requiring less processing power than usual methods.

### Summary of the Invention

These objects, and others that appear below, are achieved by a method for evaluating a radio link quality indicator according to claim 1, a use of said method according to claim 4 and a receiver of a wireless radio communication network according to claim 6.

According to the present invention, a predefined symbol sequence is contained in a data packet to be transmitted on the radio link which quality indicator has to be evaluated. After demodulation of the data signal corresponding to the data packet, the receiver extracts from the demodulated signal the part of the signal corresponding to the predefined symbol sequence. The receiver compares the known predefined symbol sequence with the signal corresponding to this predefined symbol sequence after transmission on the radio link. The radio link quality is a function of the measured error power i.e. the difference of the two above mentioned quantities.

The present invention has the advantage to give a very precise estimation of the radio link quality since it is not biased by the influence of the decoder. Moreover, the measured error power is a quantity which precision does not depend on the number of bits contained in a burst and which does not require the calculation of an average value over a high number of bursts.

The present invention uses a predefined relation between the error power and the radio link quality. Preferably, this predefined relation takes into account different noise types on the radio link and furnish a very precise and absolute indicator of the radio link quality.

Moreover, a radio link quality estimation is obtained for each burst constituting a radio block. As a consequence, several radio link quality estimations are available for one single radio bloc and a variation of the radio link quality inside one single radio bloc can be observed. In prior art methods, only one radio link quality estimation was available for each radio bloc.

Further advantageous features of the invention are defined in the dependent claims.

### Brief Description of the Drawings

Other characteristics and advantages of the invention will appear on reading the following description of a preferred embodiment given by way of non-limiting illustrations, and from the accompanying drawings, in which:
- Figure 1 shows a transmitting and receiving chain where the method according to the invention can be used;
- Figure 2 illustrates a prior art method used for determining the radio link quality;
- Figure 3a illustrates an implementation of the method according to the present invention for determining the radio link quality;
- Figure 3b illustrates a modulation constellation pattern diagram showing the difference between hard symbols and soft symbols;
- Figure 4 shows an embodiment of a receiver according to the present invention;
- Figure 5 shows a graphical relation between the error power and the radio link quality evaluation.

### Detailed Description of the Invention

Figure 1 and 2 have already been described in relation with prior art. The simplified system shown on figure 1 will also be used to illustrate the method according to the present invention.

It is assumed in the framework of this invention that data packets DP generated at data source 111 and used for evaluating the radio link quality contain a predefined symbol sequence. Preferably, all data packets contains this predefined symbol sequence. For example, this symbol sequence may be a training sequence located at a predefined position in each packet.

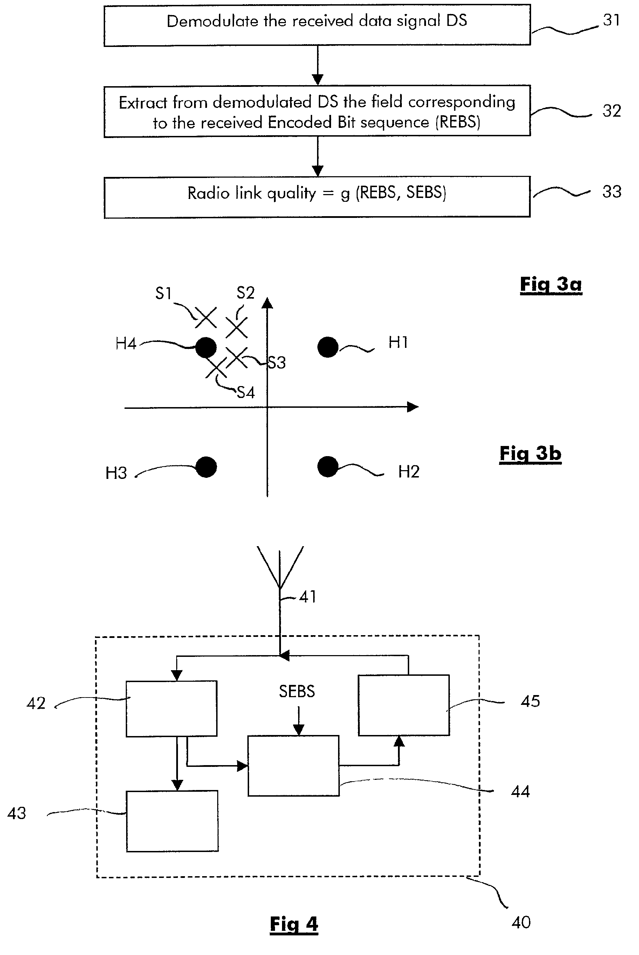

Figure 3 illustrates a method for calculating a radio link quality according to the present invention.
- Step 31 consists in demodulating a received data signal DS at demodulator 131 to obtain a demodulated data signal DDS.
- Step 32 consists in extracting from the DDS a field corresponding to the received predefined symbol sequence.
- Step 33 consists in determining the radio link quality as a function of the difference between the field corresponding to the received symbol sequence and the predefined symbol sequence stored at receiver 13.

As to step 32, the location of the field in the DDS corresponding to the received predefined symbol sequence is deducible from the location of the predefined symbol sequence in a data packet DP.

As to step 33, the field corresponding to the predefined symbol sequence in the DDS and the stored predefined symbol sequence are represented by a succession of soft symbols. The term soft symbols is opposed to the term hard symbols constituted exclusively of the modulation symbols. Soft symbols correspond to the output of the demodulator. The difference between hard and soft symbols is shown on figure 3b. Figure 3b represents a modulation constellation pattern diagram. Point H1 to H4 represent the hard modulation symbols. Points S1 to S4 represents soft symbols as they are obtained at the output of demodulator 131. In this example, soft symbol S1 to S4 will be preferably be assimilated to hard symbol H4 since they are all located at the proximity of hard symbol H4. More complex algorithms known for a man skilled in the art can of course be used to associate soft symbols to hard symbols.

The radio link quality indicator corresponds preferably to a soft symbol error probability.

In a preferred embodiment of the invention, an error power is obtained by calculating the difference between the soft symbols corresponding to the predefined symbol sequence in the DDS and the stored predefined symbol sequence. This difference may be obtained as a distance between the soft symbol obtained after demodulation and the nearest hard modulation symbol on the modulation constellation pattern diagram.

For deducing the radio link quality indicator from the error power obtained for each data packet, a relation linking the error power to the radio link quality preferably obtained by simulation is used.

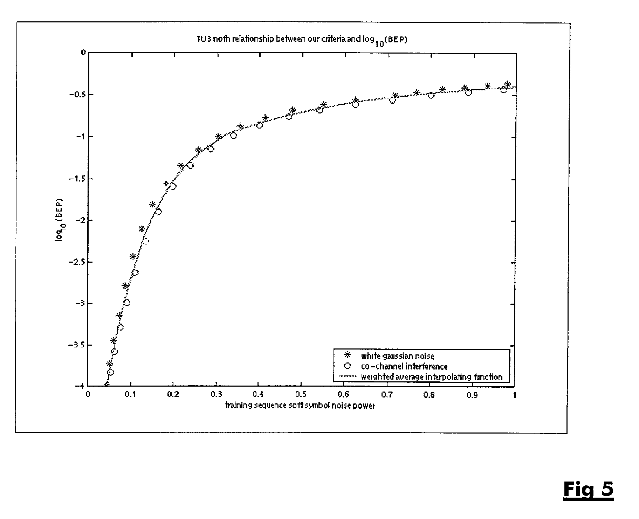

The relation is preferably obtained by simulating several types of noise affecting the radio link (white gaussian noise, co-channel interference,...) and by interpolating the results. A graphical representation showing the bit error probability as a function of the error power is shown on Figure 5.

Preferably, several successive error power values obtained for a predefined number of successive data packets can be averaged before deducing the corresponding radio link quality indicator. This has the advantage to eliminate sudden non representative variations of the radio link quality.

In a preferred embodiment, the radio link quality determined according to the method of the present invention is used for selecting one of at least two modulation schemes or one of at least two encoding schemes susceptible to be used on the radio link. Preferably, the different modulation schemes have different modulation efficiency (i.e. the number of coded bits per modulation symbol). The better the radio link quality, the higher the modulation efficiency can be. Then, the radio link quality can be used as a criterion for modifying the used modulation scheme. This has the advantage to enhance the system capacity since the used bandwidth is steadily adapted to the needs in term of radio link quality.

Moreover, for a given modulation scheme, the receiver performance in terms of bit error rate (BER) depends on the channel encoding scheme used. The higher the radio link quality, the less error-resistant the channel encoding scheme needs to be. Then, the radio link quality can be used as a criterion for modifying the used encoding scheme. This has the advantage to enhance the system capacity since the used bandwidth is steadily adapted to the needs in terms of radio link quality.

Preferably, if two modulation schemes (e.g. GMSK, 8PSK) can be used on the radio link, the first (GSMK) having a low modulation efficiency and the second (8PSK) having a higher modulation efficiency, a radio link quality threshold can be determined. For a radio link quality poorer than the predefined threshold, the first modulation scheme should be used in the other case, the second modulation scheme can be used.

The scope of the present invention is not restricted to the use of only two modulation schemes and/or two encoding schemes. In the general case, N possible modulation schemes (respectively N possible encoding schemes) can be used on the radio link, then N-1 radio link quality threshold values may be defined corresponding to the radio link quality under which the modulation scheme (respectively the encoding scheme) having the efficiency just below the efficiency of the currently used modulation scheme (respectively the used encoding scheme) should be used.

Preferably, the average value of the radio link quality or its mean square value should be taken into account by the decision of modifying the modulation resp. the encoding scheme.

The method according to the present invention as well as its use for the purpose of modifying the encoding scheme and/or the modulation scheme can advantageously be used in a EDGE (Enhanced Data Rate for GSM Evolution) or GPRS (General Packet Radio Services)wireless communication network. Use in a CDMA network could also be envisaged.

Figure 4 shows an embodiment of a receiver 40 according to the present invention. Receiver 40 comprises an antenna 41, a demodulator 42, a decoder 43, a radio link quality estimator 44 and selecting means 45 for selecting one modulation scheme and/or one encoding scheme to be used on the radio link out of at least two modulation schemes and/or out of at least two encoding schemes.

Antenna 41 is connected to demodulator 42 which is connected to decoder 43 and to radio link quality estimator 44. Radio link quality estimator 44 is connected to selecting means 45 which is connected to antenna 41. The demodulated data signal at the output of demodulator 41 is duplicated and submitted to radio link estimator 44. Stored predefined symbol sequence SEBS is also submitted to the input of radio link estimator 44. Radio link estimator 44 calculates an error power according to the method described above and deduce the radio link quality from the predefined function between the error power and the radio link quality.

The evaluated radio link quality is submitted as input of selecting means 45 which determines according to a method already described above if the modulation scheme and/or the channel encoding scheme should be modified. If a modification is needed selecting module generates a modification message to be transmitted over antenna 41 on the radio link to the corresponding transmitter.

Advantageously, when receiver 40 is a base station, the modification message is broadcast to the radio terminals under the range of the base station.

## Claims

1. Method for evaluating a radio link quality from a data signal (DS) transmitted over a radio link (12) in a wireless radio communication network, said data signal (DS) being obtained after encoding and modulation of a data packet (DP), said data packet comprising a predefined symbol sequence, said data signal being received and demodulated at a receiver, said method being **characterized in that** it comprises the steps of:
- calculating an error power by comparing a version of said predefined symbol sequence in said demodulated data signal (DDS) with said predefined symbol sequence known at said receiver;
- determining said radio link quality indicator from a predefined relation between said error power and said radio link quality indicator.

2. Method according to claim 1, **characterized in that** said predefined relation between said error power and said radio link quality indicator is obtained by interpolating simulation results obtained for different types of noise on said radio link.

3. Method according to claim 1, **characterized in that** said error power is obtained by averaging error power values obtained for a predefined number of successive data packets.

4. Use of a method according to claim 1 for determining a radio link indicator to modify, according to the radio link indicator, the modulation and/or the encoding scheme(s) in a wireless communication network supporting at least two modulation and/or encoding schemes.

5. Use of a method according to claim 4 in an EGDE (Enhanced Data rate for GSM Evolution) or GPRS (General Packet Radio Services) wireless communication network.

6. Receiver (40) of a wireless radio communication network adapted to receive data signals (DS) over a radio link, said data signal (DS) being obtained after encoding and modulation of a data packet (DP), said data packet (DP) comprising a field containing a predefined symbol sequence, said data signal (DS) being demodulated at said receiver (40), said receiver (40) being **characterized in that** it comprises:
- memory (SEBS) storing said predefined symbol sequence;
- processing means (44) for calculating an error power by comparing a version of said predefined symbol sequence in said demodulated data signal (DDS) with said stored predefined symbol sequence;
- means (44) for storing a relation between said error power and a radio link quality indicator;
- processing means (44) for determining said radio link indicator from a predefined relation between said error power and said radio link quality indicator.

7. Receiver according to claim 6, **characterized in that** it further comprises:
- selecting means (45) for selecting, depending on said radio link indicator, a modulation and/or an encoding scheme out of at least two modulation and/or encoding schemes to be used on said radio link interface.
- means (45) for sending to the transmitter of said data packet an information on the modification of said modulation and/or encoding scheme(s) to be used on said radio link.

8. Receiver according to claim 6, **characterized in that** it is a base station of an EGDE (Enhanced Data rate for GSM Evolution) or GPRS (General Packet Radio Services) wireless communication network.
